# EUROPÄISCHE PATENTSCHRIFT

(11) **EP 1 552 972 B1**
(45) Veröffentlichungstag und Bekanntmachung des Hinweises auf die Patenterteilung: **01.04.2009**
(21) Anmeldenummer: 05000108.0
(22) Anmeldetag: 05.01.2005
(51) Int. Cl.: B60H 1/00

(54) **Luftklappenantriebsvorrichtung**
Air flap driving device
Commande de clapet d'air

(30) Priorität: 08.01.2004 DE 102004001369
(43) Veröffentlichungstag der Anmeldung: 13.07.2005
(73) Patentinhaber: Spheros GmbH, 82205 Gilching (DE)
(72) Erfinder: Neidenberger, Peter, 82256 Fürstenfeldbruck (DE); Ellinger, Klaus, 82131 Gauting (DE); Scheid, Helmut, 86920 Denklingen (DE)
(74) Vertreter: Strasser, Wolfgang

(56) Entgegenhaltungen:
- EP-A- 0 763 671
- EP-A- 0 846 886
- EP-A- 1 235 001
- US-A- 5 887 930
- PATENT ABSTRACTS OF JAPAN Bd. 1997, Nr. 10, 31. Oktober 1997 (1997-10-31) & JP 09 170637 A (SUZUKI SOGYO CO LTD), 30. Juni 1997 (1997-06-30)

## Beschreibung

Die Erfindung betrifft eine Luftklappenantriebsvorrichtung zum Verschwenken einer Luftklappe eines Lüftungssystems, insbesondere eines Kraftfahrzeuglüftungssystems, um eine Schwenkachse, mit einem Elektromotor, der zum Verschwenken der Luftklappe eine Abtriebswelle antreibt.

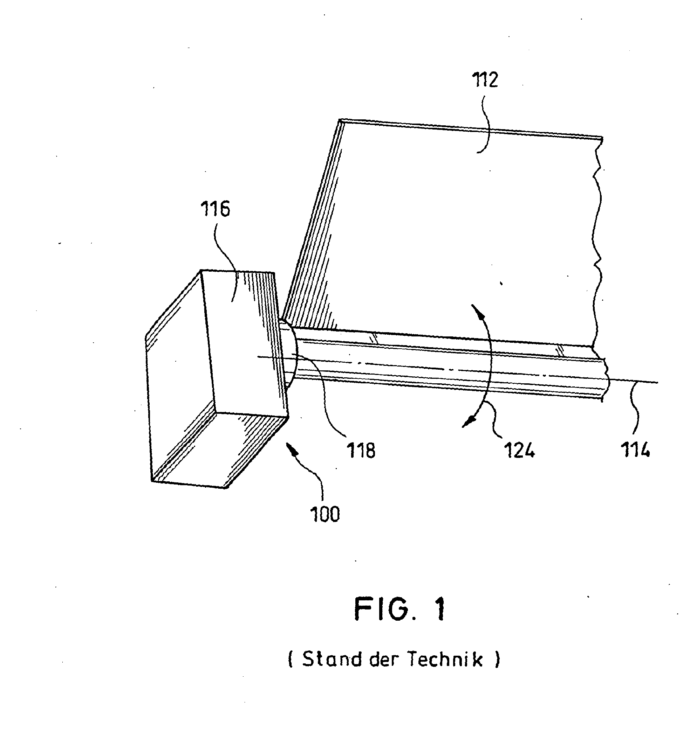

Figur 1 zeigt ein Beispiel für die gattungsgemäßen Luftklappenantriebsvorrichtungen, wie sie derzeit beispielsweise zur Regulierung der Frischluft- beziehungsweise Umluftmenge in Kraftfahrzeuglüftungssystemen eingesetzt werden. Gemäß der Darstellung von Figur 1 umfasst die Luftklappenantriebsvorrichtung 100 einen Elektromotor 116 mit einem internen (nicht näher dargestellten) Getriebe, der zum Verschwenken einer Luftklappe 112 um eine Schwenkachse 114 eine Abtriebswelle 118 antreibt.

Der Elektromotor 116 beziehungsweise das diesem zugeordnete interne Getriebe ist bezüglich seiner Festigkeit nur dazu in der Lage, Kräfte bis zu einer bestimmten Größe aufzunehmen. Im dargestellten Fall ist die Motornabe beziehungsweise die Abtriebswelle 118 direkt mit dem Drehpunkt beziehungsweise der Schwenkachse 114 der Luftklappe 112 verbunden, wobei es sich bei dieser Luftklappe 112 um eine außermittig gelagerte "Winkelklappe" handelt, das heißt der Drehpunkt beziehungsweise die Schwenkachse 114 liegt nicht im Schwerpunkt der Luftklappe 112.

Insbesondere bei einer außermittigen Lagerung der Luftklappe 112 wirken bei vertikalen Schwingungsbelastungen, die im Falle von Kraftfahrzeuglüftungssystemen beispielsweise von Fahrbahnunebenheiten und Erschütterungen hervorgerufen werden können, sehr hohe Beschleunigungen. Weiterhin wirken aufgrund der direkten Verbindung der Motornabe beziehungsweise der Abtriebswelle 118 mit der Luftklappe 112 und des Eigengewichts der Luftklappe 112 auch vergleichsweise große Drehmomente 124 auf den Elektromotor 116. Dies kann negative Folgen für den Elektromotor 116 beziehungsweise das diesem zugeordnete interne Getriebe haben. Beispielsweise kann sich das Motorspiel so stark vergrößern, dass die von dem Elektromotor 116 angefahrene und eingestellte Klappenstellung der Luftklappe 112 nicht mehr gehalten wird. Bei extremen Belastungen kann es sogar zur Zerstörung des Elek-tromotors 116 beziehungsweise zum Ausbrechen von Zahnradzähnen im internen Motorgetriebe kommen.

Eine vergleichbare Klappenantriebsvorrichtung ist auch aus EP 1 235 001 bekannt, der die Merkmale des Oberbegriffs von Anspruch 1 entnommen werden können.

Der Erfindung liegt die Aufgabe zugrunde, die gattungsgemäßen Luftklappenantriebsvorrichtungen derart zu verbessern, dass die vorstehend erläuterten Probleme beseitigt oder zumindest verringert werden.

Diese Aufgabe wird durch die Merkmale des Anspruchs 1 gelöst.

Vorteilhafte Ausgestaltungen und Weiterbildungen der Erfindung ergeben sich aus den abhängigen Ansprüchen.

Die erfindungsgemäße Luftklappenantriebsvorrichtung baut auf dem gattungsgemäßen Stand der Technik dadurch auf, dass eine Dämpfungseinrichtung zur Dämpfung von auf die Luftklappe ausgeübten Drehmomenten vorgesehen ist Durch die erfindungsgemäß vorgesehene Dämpfungseinrichtung werden die auf die Luftklappe beziehungsweise den Elektromotor ausgeübten großen Drehmomente derart gedämpft, dass eine Beschädigung des Elektromotors und oder eines diesem gegebenenfalls zugeordneten internen Getriebes vermieden wird. Diese Lösung ist, ohne darauf beschränkt zu sein, insbesondere bei einer direkten Verbindung von Motomabe beziehungsweise Abtriebswelle und Luftklappe vorteilhaft. Dies gilt umso mehr, wenn die Luftklappe außermittig gelagert ist, das heißt wenn sich die Schwenkachse der Luftklappe nicht durch deren Schwerpunkt erstreckt.

Durch die Erfindung kann eine Beschädigung des Motors beziehungsweise des internen Getriebes auch dann sicher vermieden werden, wenn vorgesehen ist, dass die Abtriebswelle auf der Schwenkachse liegt.

Bei bevorzugten Ausführungsformen der erfindungsgemäßen Luftklappenantriebsvorrichtung ist vorgesehen, dass die Dämpfungseinrichtung ein Koppelelement und ein Dämpfungselement aufweist, wobei das Koppelelement sowohl mit der Abtriebswelle als auch mit dem Dämpfungselement gekoppelt ist. Das Koppelelement kann dabei beispielsweise auf die Abtriebswelle aufgesetzt und/oder an der Luftklappe befestigt sein. Als Dämpfungselement kann irgendein dem Fachmann bekanntes Dämpfungselement verwendet werden, beispielsweise ein Lineardämpfungselement oder ein Rotationsdämpfungselement.

Aus der EP 0 763 671 A3 ist es zwar bekannt, bei einer vergleichbaren Anordnung ein Rotationsdämpfungselement zu verwenden, doch ist dieses bekannte Dämpfungselement seriell in dem Drehmomentübertragungsweg vom Antriebsmotor zur Abtriebswelle eingefügt.

Als besonders vorteilhaft wird es erachtet, dass das Koppelelement und das Dämpfungselement derart gekoppelt sind, dass kleine Bewegungen der Abtriebswelle in größere Bewegungen übersetzt werden, die von dem Dämpfungselement gedämpft werden. Durch diese Lösung wird beispielsweise das verhältnismäßig kleine Motorspiel in eine größere Bewegung übersetzt, die dann vergleichsweise einfach von dem Dämpfungselement gedämpft werden kann.

Ohne darauf beschränkt zu sein, wird es für die erfindungsgemäße Luftklappenantriebsvorrichtung als besonders vorteilhaft erachtet, dass das Dämpfungselement ein Silikonöldämpfungselement ist. Dabei kommen insbesondere Silikonöl-Rotationsdämpfungselemente in Betracht.

Insbesondere in diesem Fall kann es vorteilhaft sein, dass das Koppelelement ein mit der Abtriebswelle gekoppeltes Zahnsegment umfasst.

In diesem Fall wird es weiterhin bevorzugt, dass das Dämpfungselement ein Zahnrad umfasst, in welches das Zahnsegment eingreift. Der Einsatz von ineinander greifenden Zahnsegmenten beziehungsweise Zahnrädern ermöglicht es in besonders einfacher Weise, die oben erwähnte Übersetzung von kleinen Bewegungen der Abtriebswelle in größere Bewegungen zu optimieren.

Die Erfindung ermöglicht es insbesondere, eine Beschädigung eines als Komplettmodul gelieferten Stellmotors mit internem Getriebe zu vermeiden, indem durch Erschütterungen und so weiter hervorgerufene auf die Luftklappe einwirkende Drehmomente gedämpft werden.

Eine bevorzugte Ausführungsform der Erfindung wird nachfolgend anhand der zugehörigen Zeichnung beispielhaft erläutert.

Es zeigen:
- Figur 1: eine eingangs bereits erläuterte schematische Darstellung einer Ausführungsform einer Luftklappenantriebsvorrichtung gemäß dem Stand der Technik; und
- Figur 2: eine schematische Darstellung einer Ausführungsform der erfindungsgemäßen Luftklappenantriebsvorrichtung.

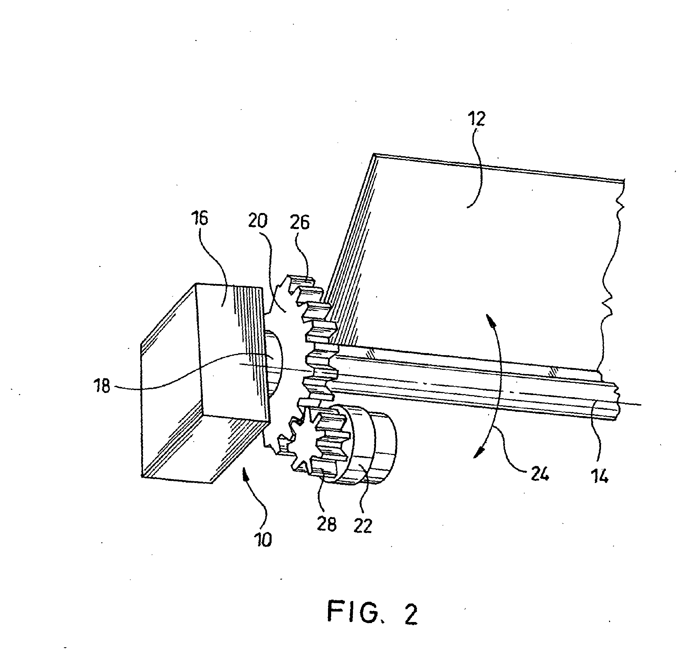

In Figur 2 ist eine insgesamt mit 10 bezeichnete Luftklappenantriebsvorrichtung dargestellt, die dazu vorgesehen ist, eine Luftklappe 12 um eine Schwenkachse 14 zu verschwenken. Die Luftklappenantriebsvorrichtung 10 umfasst einen Elektromotor 16, dem ein nicht näher dargestelltes internes Getriebe zugeordnet sein kann. Über den Elektromotor 16 wird eine Abtriebswelle 18 angetrieben, die auf der Schwenkachse 14 der Luftklappe 12 liegt. Bei der Luftklappe 12 handelt es sich um eine außermittig gelagerte Winkelklappe, durch deren Eigengewicht insbesondere im Falle von Erschütterungen hohe Drehmomente 24 hervorgerufen werden.

Um zu verhindern, dass diese Drehmomente 24 zu einer Beschädigung des Stellmotors 16 führen, ist eine Dämpfungseinrichtung 20, 22 vorgesehen, die im dargestellten Fall ein Koppelelement 20 und ein Dämpfungselement 22 umfasst. Das Koppelelement 20 weist ein Zahnsegment 26 auf und ist an der Luftklappe 12 befestigt. Das Dämpfungselement 22 ist durch ein Silikonöl-Rotationsdämpfungselement verwirklicht, das ein Zahnrad 28 aufweist, in welches das Zahnsegment 26 eingreift. Auf diese Weise wird das Dämpfungselement 22 über das Koppelelement 20 zusätzlich vom Elektromotor 16 angetrieben, so dass die großen auftretenden Drehmomente 24 gedämpft werden. Dabei übemimmt das Zahnsegment 26 die Übersetzung des kleinen Motorspiels in eine größere Bewegung, die dann von dem Dämpfungselement 22 gedämpft wird.

### Bezugszeichenliste

- 10; 100: Luftklappenantriebsvorrichtung
- 12; 112: Luftklappe
- 14; 114: Schwenkachse
- 16; 116: Elektromotor
- 18; 118: Abtriebswelle
- 20: Koppelelement
- 22: Dämpfungselement
- 24; 124: Drehmomente
- 26: Zahnsegment
- 28: Zahnrad

## Patentansprüche

1. Luftklappenantriebsvorrichtung (10) zum Verschwenken einer Luftklappe (12; 112) eines Lüftungssystems, insbesondere eines Kraftfahrzeuglüftungssystems, um eine Schwenkachse(14; 114), mit einem Elektromotor (16; 116), der zum Verschwenken der Luftklappe(12; 112) eine Abtriebswelle (18;118) antreibt,
**dadurch gekennzeichnet,**
**dass** zur Dämpfung von auf die Luftklappe (10) ausgeübten Drehmomenten (24) eine Dämpfungseinrichtung (20, 22) vorgesehen ist, die ein Koppelelement (20) und ein Dämpfungselement (22) aufweist,
und **dass** das Koppelelement (20) sowohl mit der Abtriebswelle (18) als auch mit dem Dämpfungselement (22) gekoppelt ist.

2. Luftklappenantriebsvorrichtung (10) nach Anspruch 1, **dadurch gekennzeichnet, dass** die Abtriebswelle (18) auf der Schwenkachse (14) liegt.

3. Luftklappenantriebsvorrichtung (10) nach Anspruch 2, **dadurch gekennzeichnet, dass** das Koppelement (20) und das Dämpfungselement (22) derart gekoppelt sind, dass kleine Bewegungen der Abtriebswelle (18) in größere Bewegungen übersetzt werden, die von dem Dämpfungselement (22) gedämpft werden.

4. Luftklappenantriebsvorrichtung (10) nach Anspruch 2 oder 3, **dadurch gekennzeichnet, dass** das Dämpfungselement (22) ein Silikonöldämpfungselement ist.

5. Luftklappenantriebsvorrichtung (10) nach einem der Ansprüche 2 bis 4, **dadurch gekennzeichnet, dass** das Koppelelement (20) ein mit der Abtriebswelle (18) gekoppeltes Zahnsegment (26) umfasst.

6. Luftklappenantriebsvorrichtung (10) nach Anspruch 5, **dadurch gekennzeichnet, dass** das Dämpfungselement (22) ein Zahnrad (28) umfasst, in welches das Zahnsegment (26) eingreift.

## Claims

1. An air flap drive device (10) for pivoting an air flap (12; 112) of a ventilation system, in particular a motor vehicle ventilation system, about a pivot axis (14; 114), with an electric motor (16; 116) which drives an output shaft (18; 118) for pivoting the air flap (12; 112),
**characterised in that**
for damping torques (24) exerted on the air flap (10) there is provided a damping device (20, 22) having a coupling element (20) and a damping element (22), and
the coupling element (20) is coupled both to the output shaft (18) and also to the damping element (22).

2. An air flap drive device (10) according to claim 1 **characterised in that** the output shaft (10) lies on the pivot axis (14).

3. An air flap drive device (10) according to claim 2 **characterised in that** the coupling element (20) and the damping element (22) are so coupled that small movements of the output shaft (18) are converted into larger movements which are damped by the damping element (22).

4. An air flap drive device (10) according to claim 2 or claim 3 **characterised in that** the damping element (22) is a silicone oil damping element.

5. An air flap drive device (10) according to one of claims 2 to 4 **characterised in that** the coupling element (20) includes a toothed segment (26) coupled to the output shaft (18).

6. An air flap drive device (10) according to claim 5 **characterised in that** the damping element (22) includes a gear (28) into which the toothed segment (26) engages.

## Revendications

1. Dispositif de commande de clapet d'air (10) destiné à faire pivoter un clapet d'air (12 ; 112) d'un système de ventilation, en particulier d'un système de ventilation d'un véhicule automobile, autour d'un axe de pivotement (14; 114), comportant un moteur électrique (16 ; 116) qui actionne un arbre de sortie (18 ; 118) pour faire pivoter le clapet d'air (12; 112),
**caractérisé en ce que,** pour atténuer les couples de rotation (24) exercés sur le clapet d'air (10), il est prévu un dispositif d'amortissement (20, 22), qui comporte un élément de couplage (20) et un élément d'amortissement (22),
et **en ce que** l'élément de couplage (20) est couplé à l'arbre de sortie (18), de même qu'à l'élément d'amortissement (22).

2. Dispositif de commande de clapet d'air (10) selon la revendication 1, **caractérisé en ce que** l'arbre de sortie (18) est situé sur l'axe de pivotement (14).

3. Dispositif de commande de clapet d'air (10) selon la revendication 2, **caractérisé en ce que** l'élément de couplage (20) et l'élément d'amortissement (22) sont couplés de telle sorte que des petits mouvements de l'arbre de sortie (18) sont transformés en mouvements plus importants qui sont amortis par l'élément d'amortissement (22).

4. Dispositif de commande de clapet d'air (10) selon la revendication 2 ou 3, **caractérisé en ce que** l'élément d'amortissement (22) est un élément d'amortissement à huile de silicone.

5. Dispositif de commande de clapet d'air (10) selon l'une quelconque des revendications 2 à 4, **caractérisé en ce que** l'élément de couplage (20) comporte un segment denté (26) couplé à l'arbre de sortie (18).

6. Dispositif de commande de clapet d'air (10) selon la revendication 5, **caractérisé en ce que** l'élément d'amortissement (22) comporte une roue dentée (28) dans laquelle engrène le segment denté (26).
